# EUROPÄISCHE PATENTSCHRIFT

(11) **EP 2 918 185 B1**
(45) Veröffentlichungstag und Bekanntmachung des Hinweises auf die Patenterteilung: **20.09.2017**
(21) Anmeldenummer: 14158821.0
(22) Anmeldetag: 11.03.2014
(51) Int. Cl.: A43B 13/38, D06P 5/28, B32B 5/18, B32B 5/20, B29D 35/12, B32B 27/06, A43B 13/18

(54) **Schaumkunststoff-schuheinlegesohlen-rohling**
Shoe insole blanks of foamed plastic material
Semelles de chaussures en matière synthétique expansée

(43) Veröffentlichungstag der Anmeldung: 16.09.2015
(73) Patentinhaber: Spannrit GmbH, 63801 Kleinostheim (DE)
(72) Erfinder: Katzer, Roland, 63801 Kleinostheim (DE)
(74) Vertreter: Erhardt, Martin

(56) Entgegenhaltungen:
- EP-A1- 1 842 441
- WO-A1-2004/106082
- WO-A1-2010/056784
- WO-A1-2012/110113
- CN-U- 202 378 398
- KR-A- 20020 078 676
- US-A1- 2005 241 186
- US-A1- 2006 288 613

## Beschreibung

Die Erfindung betrifft Schaumkunststoff-Schuheinlegesohlen-Rohlinge, die mit einem Schäumverfahren hergestellt werden. Die Erfindung betrifft insbesondere Schaumkunststoff-Schuheinlegesohlen-Rohlinge, die in einer Schäumform in eine Schuheinlegesohlen-ähnliche Form aus Schaumkunststoff aufgeschäumt werden. Insbesondere betrifft die Erfindung Schaumkunststoff-Schuheinlegesohlen-Rohlinge, welche aus EVA- oder PU-Schaumkunststoff hergestellt werden. Dabei betrifft die Erfindung insbesondere Schaumkunststoff-Schuheinlege-sohlen-Rohlinge, die im RIM-Verfahren hergestellt werden.

Schaumkunststoff-Schuheinlegesohlen-Rohlinge, die im Schäumverfahren in einer Schäumform erzeugt werden, weisen nach ihrer Entnahme aus der Schäumform üblicherweise ein unfertiges, rohes bzw. unattraktives, nicht besonders ansprechendes, meist ein- oder zweifarbiges Erscheinungsbild auf. Ein solches schlichtes und einfaches Erscheinungsbild bietet, wie es sich von selbst versteht, keinen besonderen Kaufanreiz, geschweige denn eine verkaufsfördernde Optik.

Zur Verbesserung des Tragekomforts und/oder des Erscheinungsbildes werden die Schuheinlegesohlen-Rohlinge daher meist auf ihrer Oberseite mit einer Decke versehen, damit die Schuheinlegesohle bzw. der Einlegesohlen-Rohling ein hochwertigeres Erscheinungsbild erhält. Solche Decken sind üblicherweise aus Alcantara, Leder, Lederimitation, Textil, Vlies, Kork oder ähnlichem hergestellt und müssen in einem zusätzlichen Arbeitsschritt auf den Schaumkunststoff-Schuheinlegesohlen-Rohling aufgebracht werden. Dies erfolgt üblicherweise mittels eines in einem zusätzlichen Arbeitsschritt separat aufgebrachten Heißklebers. Diese Decken können die verschiedenartigsten Dekors aufweisen, wobei oftmals auch Mehrfachdecken zum Hervorheben bestimmter Bereiche Verwendung finden. Jedoch ist eine solche Aufwertung des Erscheinungsbildes und des Tragekomforts mittels Decken teuer und aufwendig, insbesondere, da es sich um einen zusätzlichen Arbeitsschritt handelt.

Aus EP 14 156 215.7 sind Schaumkunststoff-Schuheinlegesohlen-Rohlinge bekannt, bei denen eine Ober- oder/und eine Unterseite im Thermotransferdruckverfahren mit einem Dekor versehen wird, wobei die Ober- oder/und Unterseite aus Schaumkunststoff ausgebildet ist bzw. sind. Dabei wird Thermotransferpapier direkt auf die geschäumte oder mechanisch nachbearbeitete Schaumkunststoffoberfläche, die bedruckt werden soll, aufgelegt und die Schaumkunststoff-Oberfläche durch Aufbringen von Wärme und Druck unmittelbar mit dem Muster bedruckt, das das Thermotransferpapier aufweist. Nach dem Bedrucken des Schaumkunststoff-Schuheinlegesohlen-Rohlings wird das Thermotransferpapier entfernt, spätestens jedoch vor dem Einlegen der Schaumkunststoff-Schuheinlegesohle in einen Schuh. Gleichzeitig mit dem Bedrucken wird eine Versiegelung der bedruckten Schaumkunststoff-Oberfläche erreicht, indem beispielsweise Poren und Bearbeitungsspuren vorangegangener Fräs- und oder Schleifarbeiten auf der zu bedruckenden Schaumkunststoff-Oberfläche durch die Wärmeeinwirkung plastisch verformt werden.

Aus DE 20 2005 018 920 U1 sind Schuhsohlen, insbesondere Schuhaußensohlen, aus PU-Vollmaterial oder PU-Verbundwerkstoffen bekannt, die während eines Schmelzvorganges des eingesetzten Materials (Heißgießvorganges) mit einer Thermotransferschicht zum Erzeugen eines Dekors schmelzverbunden werden. Die Thermotransferschicht ist beispielsweise aus thermoplastischen Polyurethan (TPU), das sich mit der PU-Schmelze gut verbindet. Hierbei bildet die vor dem Schmelzen (Formgießen) in die Form tiefgezogene Folie die Unterseite der späteren Schuheinlegesohle. Das in DE 20 2005 018 920 U1 beschriebene Verfahren ist weitestgehend auf TPU-Folien beschränkt, da nur diese eine gute Verbindung zum aufgeschmolzenen PU ausbilden. Zudem stellt eine TPU-Folie eine hinsichtlich der Variabilität des Dekors sehr eingeschränkte Möglichkeit der Verschönerung einer Schuheinlegesohle dar.

Eine ähnliche Art und Weise eine mit einem Dekor versehene Schuheinlegesohle bereitzustellen, gibt US 2005 / 024 1186 A1 an. Hierbei wird einer thermisch verformbaren mit einem Dekor bedruckten Schicht eine weitere Schicht aus einem dämpfenden, formbaren Schaummaterial während des Schäumens einer Innensohle hinzugefügt, wobei die bedruckte Seite der thermisch verformbaren Schicht eine dekorative Unterseite der Innensohle bildet.

Ein hinsichtlich der Variabilität des Dekors flexibleres Verfahren ist in DE 100 32 546 A1 beschrieben, welches ein Verfahren zum Bedrucken von Leder, beispielsweise für Schuhe, beschreibt. Bei diesem Verfahren wird das Leder zunächst mit selbstaushärtenden Polymeren beschichtet, bevor über ein Thermotransferdruckverfahren Farbe auf die Beschichtung aufgetragen wird. Ein solches Verfahren zum Bedrucken von textilen Trägermaterialien mit vorangegangener Beschichtung eines selbstaushärtenden Polymers ist beispielsweise beim Bedrucken von T-Shirts aus Baumwolle bekannt. Hier wird die Baumwolle vor dem Aufbringen der Sublimationsfarbe (=Thermotransferfarbe) zuerst mit Polyester beschichtet, damit die Farbe später gut am T-Shirt anhaftet. Gelegentlich kommen als sublimationsdruckfähige Fasern auch Polyamid, Polyacrylnitril und Zelluloseacetat in Frage, welche aber im Vergleich zu Polyester weniger gut geeignet sind. Analog zum Bedrucken von T-Shirts ist auch das Bedrucken anderer Trägerstoffe bekannt, wie sie beispielsweise bei der Schuheinlegesohlen-Herstellung eingesetzt werden. Diese Materialien, wie Leder, Lederimitate, Alcantara, Kork, Vliese und dergleichen, müssen vor dem Bedrucken im Sublimationsdruck- bzw. Thermotransferdruckverfahren vor dem Bedrucken geeigneterweise mit Polyester beschichtet werden.

Eine weitere Art ein dekorative Schuhsohle bereitzustellen ist in KR 2002 007 9676 (A) beschrieben. Hier wird zwischen einer transparenten aus Polyurethan gebildeten Außenschicht und einer EVA-Schaumschicht als Mittelsohle ein bedruckter Film (print pattern film) angeordnet, der durch die transparente Außensohle sichtbar ist und mit dem EVA-Schaummaterial über eine Klebeschicht verbunden ist.

Aufgabe der vorliegenden Erfindung ist es daher, einen Schaumkunststoff-Schuheinlegesohlen-Rohlinge bereitzustellen, die mit einem Dekor versehen werden können, wobei sowohl die zum Einsatz kommenden Materialien als auch das Erscheinungsbild bzw. Muster variabel auswählbar sein sollen. Zudem soll das Verfahren zu wirtschaftlich akzeptablen Kosten durchführbar sein. Ferner sollen mit der Erfindung ein Schuheinlegesohlen-Rohlinge bereitgestellt werden, die nicht nur ein wertigeres Aussehen aufweisen, sondern auch eine abriebfeste, stabile und robuste und damit hochwertige, dekorierte Oberfläche aufweisen.

Die Aufgaben, die an die Erfindung gestellt werden, werden mit einem Schaumkunststoff-Schuheinlegesohlen-Rohling nach Anspruch 1 gelöst. Weitere bevorzugte Ausführungsformen sind in den von Anspruch 1 abhängigen Unteransprüchen angegeben.

Erfindungsgemäß wird ein Schaumkunststoff-Schuheinlegesohlen-Rohling, der in einer Schäumform ausgebildet wurde und eine Oberseite, auf der ein Fußbett ausgebildet ist, bereitgestellt. Die Unterseite eines erfindungsgemäßen Schaumkunststoff-Schuheinlegesohlen-Rohlings ist bevorzugt an eine Schuhinnenform angepasst. An der Oberseite und/oder der Unterseite des Schaumkunststoff-Schuheinlegesohlen-Rohlings ist sichtbar eine bedruckte transparente Folie angeordnet, die in einem ersten Ausführungsbeispiel beispielsweise während des Ausschäumens einer Ausschäumform mit dem Schaumkunststoff des Schaumkunststoff-Schuheinlegesohlen-Rohlings angeschäumt wurde, wobei sich die bedruckte transparente Folie während des Schäumvorganges mit dem Schaumkunststoff verbindet. In diesem Ausführungsbeispiel wird die am Schaumkunststoff-Schuheinlegesohlen-Rohling sichtbare transparente und bedruckte Folie vor dem Aufschäumen des Schuheinlegesohlen-Körpers in die Ausschäumform eingelegt, und zwar derart, dass ihre bedruckte Seite dem Schaumkunststoff zugewandt ist und die nicht bedruckte Seite der Folie nach der Entnahme des Schaumkunststoff-Schuheinlegesohlen-Rohlings aus der Ausschäumform an der Oberseite und/oder der Unterseite des Schaumkunststoff-Schuheinlegesohlen-Rohlings sichtbar ist.

In einem anderen Ausführungsbeispiel der Erfindung kann der Schaumkunststoff-Körper des erfindungsgemäßen Schaumkunststoff-Schuheinlegesohlen-Rohlings nach der Entnahme des Rohlings aus einer Ausschäumform mit einer im Thermotransferdruckverfahren bedruckten transparenten Folie versehen werden, wobei die bedruckte Seite der Folie dem Schaumkunststoff zugewandt ist und die bedruckte transparente Folie durch Aufbügeln mit dem Schaumkunststoff des Schaumkunststoff-Schuheinlegesohlen-Rohling verbunden wird. Die als Farbträger dienende Folie wird erfindungsgemäß auf dem Schaumkunststoff-Schuheinlegesohlen-Rohling belassen und verbessert so die Oberflächenbeschaffenheit der Einlegesohle, beispielsweise deren Abriebfestigkeit oder deren Anti-rutsch Eigenschaft.

Erfindungsgemäß wird die transparente Folie vor dem Einlegen in die Ausschäumform oder vor dem Aufbügeln auf den geschämten Rohling einseitig im Thermotransferdruckverfahren (Sublimationsdruckverfahren) mit einem Dekor versehen, welches durch die transparente Folie hindurch sichtbar ist. Über die Sublimationsfarbe, die an der transparenten Folie anhaftet, wird eine Verbindung zum Schaumkunststoff hergestellt, wodurch die transparente Folie am Schaumkunststoffkörper des Schaumkunststoff-Schuheinlegesohlen-Rohlings anhaftet.

Mit dem erfindungsgemäßen Verfahren zum Herstellen eines Schaumkunststoff-Schuheinlegesohlen-Rohlings wird ein Schaumkunststoff-Schuheinlegesohlen-Rohling mit ansprechender Optik bereitgestellt, bei dem eine transparente Folie zunächst einseitig im Thermotransferdruckverfahren mit einem Dekor versehen wird und die bedruckte Seite der transparenten Folie in einem Schäumvorgang mit Schaumkunststoff benetzt wird oder die bedruckte transparente Folie auf einen Schaumkunststoff-Schuheinlegesohlen-Rohling aufgebügelt wird. Dabei können beispielsweise an sich im Schäumprozess sich nicht verbindbare Materialien über die aufgebrachte Thermotransferfarbe (= Sublimationsfarbe) zur Verbindung gebracht werden. Gleichfalls können so Folien auf einen Schaumkunststoff-Schuheinlege-sohlen-Rohling aufgebracht werden die sonst beispielsweise mit einem Heißkleber oder einem anderen Kleber auf dem Rohling fixiert werden müssten. Dies bedeutet üblicherweise einen Material- Arbeitszeitmehraufwand, der die Herstellkosten der herkömmlich verzierten Sohlen in die Höhe treibt. Mit der erfindungsgemäßen Veredelung der Schaumkunststoff-Schuheinlegesohlen-Rohling mit einer im Sublimationsverfahren bedruckten Folie können die Herstellkosten gering gehalten werden, da die transparente Folie sowohl im Entstehungsprozeß des Schaumkunststoff-Schuheinlegesohlen-Rohlings angeschäumt als nachträglich in einfachster Art und Weise aufgebügelt werden kann, ohne dass weitere Haftvermittler, insbesondere Heißkleber notwendig sind. Die dabei erzielte Haftung reicht aus, dass die verwendeten Folien während der Verwendung der Schuheinlegesohle fest mit dem Schaumkunststoff verbunden bleiben.

Bei der Durchführung des erfindungsgemäßen Verfahrens zur Herstellung eines Schaumkunststoff-Schuheinlegesohlen-Rohlings mit einer mit einem Dekor versehenen angeschäumten oder aufgebügelten transparenten Folie, die an der Oberseite und/oder der Unterseite des Schuheinlegesohlen-Rohlings angeordnet ist, hat sich ferner herausgestellt, dass das Thermotransferdruckverfahren auf Folien anwendbar ist, die eigentlich eine schlechte Haftung für die Thermotransferfarbe zeigen. Somit können in dem erfindungsgemäßen Verfahren Folienwerkstoffe bzw. Materialien verwendet werden, die eigentlich für das Thermotransferdruck-Verfahren ungeeignet sind, da auf ihnen die Thermotransferfarben nicht dauerhaft anhaften. Werden solche gegebenenfalls eine schlechte Haftung für Farben aufweisende Folien für Sublimationsfarben verwendet, so wird bevorzugt das als Farbträger verwendete Sublimationspapier nach dem Bedruck- bzw. Warmpressvorgang der transparenten Folie auf dieser belassen und erst kurz vor oder direkt nach dem Einlegen der bedruckten transparenten Folie in die Ausschäumform entfernt. Damit werden eventuelle Fehlstellen, welche beispielsweise durch Verwischungen des Dekors auftreten können, auf der transparenten Folie weitestgehend vermieden. Analoges gilt für das Aufbügeln einer bedruckten transparenten Folie auf einen Schaumkunststoff-Schuheinlegesohlen-Rohling. Hier wird bevorzugt das Sublimationspapier erst kurz vor dem Auflegen der bedruckten Folie auf die zu bedeckende Schaumkunststoffoberfläche entfernt. In beiden Fällen - also sowohl beim Anschäumen als auch beim Aufbügeln - agiert die auf die Folie oder flexible Schicht zuvor aufgebrachte Sublimationsfarbe als Haftvermittler zwischen dem Folienmaterial und dem Schaumkunststoff des Einlegesohlen-Rohlings.

Die erfindungsgemäß eingesetzten transparenten Folien können dabei aus den vielfältigsten Materialien sein, jedoch sollten sie, damit das Dekor durchscheint zumindest teilweise oder in Teilbereichen transparent sein. Dabei sind klar transparente Folien genauso bevorzugt, wie farbig transparente Folien. Mit Folien werden erfindungsgemäß Farbträger bezeichnet die eine folienartige Struktur zeigen, wobei der Begriff Folie nicht auf ein bestimmtes Material hinweisen soll. Genauso bevorzugt wie Folien aus EVA, können auch Folien aus allen anderen denkbaren Kunststoffen erfindungsgemäß eingesetzt werden, wie bspw. PE, PA, PP, TPU, PU, etc.

In einem bevorzugten, konkreten Ausführungsbeispiel, bei dem erfindungsgemäß eine bedruckte transparenten Folie mit dem Schaumkunststoff-Schuheinlegesohlen-Rohling durch Anschäumen verbunden werden soll, wird beispielsweise zunächst eine transparente EVA-Folie im Sublimationsdruckverfahren bedruckt und das Sublimationspapier, welches die Sublimationsfarbe für das Sublimationsbedrucken der EVA-Folien bereitstellt, nach dem Warmpressen auf der Folie belassen. EVA-Folien sind bekannt, dass sie mit dem Sublimationsdruckverfahren nicht dauerhaft bedruckt werden können, da die Sublimationsfarbe auf dem EVA-Material nur unzureichend anhaftet. Dementsprechend wird das Sublimationspapier erst kurz vor dem Einlegen der bedruckten transparenten EVA-Folie entfernt bzw. erst dann entfernt, wenn der Verbund aus bedruckter transparenter EVA-Folie und Sublimationspapier in die Ausschäumform eingelegt wurde. Nachdem das Sublimationspapier entfernt wurde und die bedruckte transparente EVA-Folie gegebenenfalls in der Ausschäumform fixiert wurde, wird die Ausschäumform mit dem Schaumkunststoff zur Herstellung eines Schaumkunststoff-Schuheinlegesohlen-Rohlings ausgeschäumt. Hierbei werden bevorzugt EVA-Schäume oder PU-Schäume verwendet, wobei bei letzteren Schäumen insbesondere das RIM-Verfahren bevorzugt zum Einsatz kommt.

Während im obigen konkreten Ausführungsbeispiel die Folie durch Anschäumen mit Schaumkunststoff am Schaumkunststoff-Schuheinlegesohlen-Rohling fixiert wird und so die mit der Folie versehene Oberfläche nur noch bedingt beispielsweise orthopädisch bearbeitbar ist, ohne das Dekor zu beschädigen, kann die mit Thermotransferfarbe versehene transparenten Folie auch nachträglich durch Aufbügeln auf einen beispielsweise orthopädisch angepassten Schaumkunststoff-Schuheinlegesohlen-Rohling aufgebracht werden. Dies ist speziell dann bevorzugt, wenn eine eine allgemeine Fußform unterstützende Schuheinlage individuell durch z.B. einen Schuhorthopädie-Techniker oder Orthopäden angepasst werden soll, bevor die Einlage in einen Schuh eingelegt wird. Dabei kann sowohl die Ober- als auch die Unterseite von Schuhtechniker anpassbar sein. Mit dem erfindungsgemäßen Verfahren, mit dem nach den erfolgten Anpassarbeiten eine mit einem ansprechenden Dekor versehenen Folie einfach aufgebügelt werden kann, wird dem Schuhorthopädie-Techniker bzw. dem Orthopäden ein einfaches und kostengünstiges Verfahren an die Hand gegeben, mit dem eine individuell angepasste Schaumkunststoff-Schuheinlegesohle herstellbar ist, die nicht nur eine veredelte Oberfläche aufweist, sondern bei der auch Spuren der Fräs- und Schleifarbeiten kaschiert werden. So weist die fertige Schaumkunststoff-Schuheinlegesohle ein wertiges Aussehen auf und erhält über die verwendete Folie ggf. weitere vorteilhafte Eigenschaften, wie Abriebfestigkeit oder anti-rutsch Verhalten.

Für den Schuhorthopädie-Techniker erhöht sich durch das erfindungsgemäße Verfahren, eine vorbedruckte transparenten Folie nach der Anpassung des Schaumkunststoff-Schuheinlegesohlen-Rohlings in einfacher Art aufbügeln zu können, die Möglichkeiten der Anpassung bei gleichzeitiger Reduzierung des Arbeitsaufwandes. So können gleichzeitig mit dem Bedrucken/Aufbügeln der transparenten Folie beispielsweise Pelotten, Keile, Gel-Kissen oder andere orthopädische Hilfsmittel mitfestgesetzt bzw. integriert oder mit der transparenten Folie überspannt werden und ggf. nicht auf dem ersten Blick sichtbar an der Schaumkunststoff-Schuheinlegesohlen-Rohling angeordnet werden. Für die Verwirklichung der Erfindung ist es nicht erheblich, wie die Sublimationsfarbe auf der transparenten Folie durch Wärme aktiviert werden kann. Dies kann beispielsweise durch IR-Strahler und nachträgliches Anpressen der Folie auf die Sohle erfolgen oder durch einen beheizbaren Leisten, der ggf. in bestimmten Bereichen nachgiebig ist. Weiter vorstellbar ist auch die Aktivierung durch Mikrowellen, in dem beispielsweise der Sublimationsfarbe oder dem Schaumkunststoff mikrowellen-aktivierbare Partikel beigemengt werden.

Durch das Bedrucken von transparenten Folien und dem anschließenden erfindungsgemäßen Anschäumen oder Aufbügeln der bedruckten Seite der transparenten Folie bei der Herstellung von Schaumkunststoff-Schuheinlegesohlen-Rohlingen wird somit erreicht, dass zum einen eine nur ungenügend haftende Sublimationsfarbe auf einer transparenten Folie fixiert wird und gleichzeitig eine Verbindung zwischen der transparenten Folie und dem Schaumstoffkörper erzielt wird, die ohne die Verwendung von Sublimationsfarbe nicht möglich wäre. Während des Schäumverfahrens agiert die Sublimationsfarbe somit als eine Art Kleber, um einerseits eine Verbindung zwischen der eingesetzten transparenten Folie und dem verwendeten Schaumkunststoff zu erzeugen, als auch um das Dekor auf der transparenten Folie zu fixieren. Im Ergebnis entsteht ein Schaumkunststoff-Schuheinlegesohlen-Rohling, der neben einer ansprechenden Optik und eines wertigen Erscheinungsbildes auch eine hochwertige Oberfläche aufweist, die durch die nicht bedruckte Seite der transparenten Folie bereitgestellt wird. Mit dem erfindungsgemäßen Verfahren können somit Schaumkunststoff-Schuheinlege-sohlen-Rohlinge bereitgestellt werden, die mit einem festen Bezug - auch Decke genannt - versehen sind, welcher den Schaumkunststoff gegenüber Abnutzungserscheinungen resistent macht, wobei gleichzeitig ein gegebenenfalls individuell erzeugbares Dekor einen verkaufsfördernden Effekt bereitstellt.

In weiteren bevorzugten Ausführungsformen ist die bedruckte transparente Folie nach Entnahme des Schaumkunststoff-Schuheinlegesohlen-Rohlings aus der Ausschäumform beispielsweise an der Oberseite des Rohlings angeordnet, also beispielsweise auf der Seite, auf der ein Fußbett am Schuheinlegesohlen-Rohling ausgebildet ist. In einer weiteren bevorzugten Ausführungsform ist die bedruckte transparente Folie an der Unterseite des Schaumkunststoff-Schuheinlegesohlen-Rohlings angeordnet, wobei die Unterseite weiter bevorzugt durch die Schäumform bereits an eine Schuhinnenform eines Schuhs, in den die Schuheinlegesohle eingelegt werden soll, angepasst ist. In einer weiteren bevorzugten Ausführungsform ist die bedruckte transparente Folie sowohl an der Oberseite als auch an der Unterseite des Schaumkunststoff-Schuheinlegsohlen-Rohlings angeordnet. Bei einigen Ausführungsformen ist hierbei sowohl eine teilweise als auch vollflächige Bedeckung der Ober- und/oder Unterseite mit der bedruckten transparenten Folie vom Erfindungsgedanken umfasst. So kann beispielsweise die bedruckte transparente Folie auf der Unterseite nur in Teilbereichen angeordnet sein, wobei auf der Oberseite eine vollflächige Bedeckung/Anschäumung des Schaumkunststoff-Schuheinlegesohlen-Rohlings mit einer bedruckten transparenten Folie erfolgt ist.

In einer weiteren bevorzugten Ausführungsform ist der mit einer bedruckten transparenten Folie versehene Schaumkunststoff-Schuheinlegesohlen-Rohling in der Ausschäumform derart ausgebildet worden, dass er auf seiner Oberseite ein Fußbett aufweist, das beispielsweise ein Normfußbett für eine Unterstützung einer durchschnittlichen Fußsohle geeignet ist. Vorstellbar sind hierbei jedoch auch Fußbetten, die geeignet sind, allgemeine Fußfehlstellungen, wie beispielsweise Spreiz- oder Senkfüße zu korrigieren. Aber auch für Diabetiker geeignete Formen von Fußbetten, die auch geeignete weiche Materialien, wie beispielsweise Gelfolien aufweisen, können bei der erfindungsgemäßen Schaumkunststoff-Schuheinlegesohlen-Rohling zum Einsatz kommen. Dabei - auch wenn ein Fußbett auf der Oberseite durch die Ausschäumform bereits vorgegeben wird - sind mechanische Nacharbeitungen durch einen Orthopäden oder einen Schuhorthopädietechniker nicht ausgeschlossen. Bevorzugt kann in diesen Fall nach der individuellen Anpassung erfindungsgemäß eine (vor-)bedruckte transparenten Folie auf das individualisierte Fußbett aufgebügelt bzw. mit der Sohle warmverpresst werden. Selbstredend sind vom Erfindungsgedanken auch Schaumkunststoff-Schuheinlegesohlen-Rohling bzw. fertige Schaumkunststoff-Schuheinlegesohlen umfasst, bei denen beide erfindungsgemäße Arten von An- bzw. Aufbringen eines Dekor mittels einer bedruckte transparenten Folie verwirklicht sind. So kann beispielsweise eine anpassbare Unterseite eines Schaumkunststoff-Schuheinlegesohlen-Rohlings nach der Anpassung durch einen Orthopäden mit einer verbügelten bedruckten transparenten Folie versehen sein, wobei die Oberseite eine angeschäumte bedruckte transparenten Folie aufweist. Analog kann eine angeschäumte bedruckte transparente Folie auf der Unterseite vorgesehen sein und die Oberseite eine verbügelte bedruckte transparenten Folie aufweisen, welche beispielsweise nach einer individuellen Anpassung des Fußbettes aufgebrachte wurde.

Analog zum Fußbett auf der Oberseite des Schaumkunststoff-Schuheinlegesohlen-Rohlings kann, ggf. zusätzlich, auf dessen Unterseite durch die Schäumform eine Anpassung an einen Schuh, in den die Schuheinlegesohle eingelegt werden soll, erfolgen. Dabei kann die Anpassung an individuelle Schuhformen, also im Allgemeinen an (genormte) Schuhgrößen und allgemeine Schuhformen vorgenommen werden. Vom Erfindungsgedanken umfasst sind auch alle Schaumkunststoff-Schuheinlegesohlen-Rohlinge, die nachträglich mit einer bedruckten transparenten Folie versehen werden, nachdem der Rohling gegebenenfalls von einem Schuhorthopädietechniker, beispielsweise durch Schleifen oder Fräsen, individuell an den Fuß eines Träger der Schaumkunststoff-Schuheinlegesohle angepasst wurde. Dabei kann die Anpassarbeit sowohl in Bereichen erfolgen, in der die bedruckte transparente Folie angeordnet ist, als auch weiter bevorzugt in Bereichen, die keine solche Folie aufweisen. Geeigneterweise ist die Verbindung zwischen der bedruckten transparenten Folie und dem Schaumkunststoff stark genug, damit Anpassarbeiten sowohl an der Oberseite als auch an der Unterseite zum Anpassen der Schuheinlegesohle an einen Fuß oder einen Schuh erfolgen kann, ohne dass die bedruckte transparente Folie vom Schaumkunststoffkörper während der Nacharbeit abgelöst wird. Weiter bevorzugt können die bearbeiteten Bereiche, d.h. dort auftretende Schleif- und/oder Frässpuren durch Aufbringen einer bedruckten transparenten Folie verdeckt oder zumindest kaschiert werden.

Weiter vom Erfindungsgedanken umfasst sind auch Schuheinlegesohlen, die auf ihrer Ober- und/oder Unterseite eine herkömmliche Decke aus textilen Deckmaterialien, wie beispielsweise Leder, Alcantara, Vlies, Gewebe, etc. aufweisen und auf der jeweils anderen Seite oder innerhalb einer Ausnehmung im textilen Deckmaterial ein Dekor zeigen, welches mit einer bedruckten transparenten Folie im Schäumverfahren oder im Aufbügelverfahren erzeugt wurde.

Ferner sind vom Erfindungsgedanken Schaumkunststoff-Schuheinlegesohlen-Rohlinge umfasst, die eine bedruckte transparente Folie aufweisen und deren Schaumkunststoffkörper ein oder mehrere Schaumkunststoffmaterialien aufweist. Dabei ist vorstellbar, dass die unterschiedlichen Schaumkunststoffmaterialien unterschiedliche Shore-Härten zeigen und aus einer oder mehrerer Materialsorten bestehen. So kann beispielsweise ein Fersenbereich eine andere Materialhärte aufweisen wie ein Mittelfußbereich, indem beispielsweise ein Längsgewölbe in der Sohle ausgebildet ist. Weiter kann der Mittelfußbereich eine andere Materialhärte aufweisen als der Vorderfußbereich, welcher etwa unterhalb der Zehenwurzelknochen bis zur Sohlenspitze reicht. Bevorzugt - aber nicht darauf beschränkt - ist dabei der Fersenbereich im Allgemeinen härter ausgebildet als der Vorderfußbereich und weiter bevorzugt härter ausgebildet als der Mittelfußbereich, wobei der Mittelfußbereich im Allgemeinen härter ausgebildet ist als der Vorderfußbereich. Diese Härteangaben sind jedoch nur orientativ, da je nach individuellen Bedürfnissen der Träger der Schuheinlegesohle diese Härten angepasst werden können. Wie oben bereits angedeutet, lassen sich die unterschiedlichen Härten beispielsweise über unterschiedliche Materialien oder durch unterschiedliche Mischungen einer Materialsorte erzeugen. Wie die einzelnen Schaumkunststoffmaterialien bzw. deren Härten erzeugt werden, ist jedoch für die Ausführung der Erfindung unerheblich. Das erfindungsgemäße Anschäumen oder Aufbügeln einer bedruckten transparenten Folie kann sowohl bei weichen Schaumkunststoffen als auch bei harten Schaumkunststoffen eingesetzt werden.

In weiteren Ausführungsformen können die erfindungsgemäßen Schaumkunststoff-Schuheinlegesohlen-Rohlinge weitere Einlegeteile bzw. Kernteile aufweisen, welche gegebenenfalls zusätzlich zur bedruckten transparenten Folie in die Ausschäumform eingelegt werden. So kann beispielsweise der Fersenbereich eines Fußes durch ein formsteifes Kernteil, welches beispielsweise im Spritzgussverfahren (vor-)produziert wurde, unterstützt werden, wobei das Kernteil bevorzugt so in die Form eingelegt wird, dass, nach Entnahme des Schaumkunststoff-Schuheinlegesohlen-Rohlings aus der Ausschäumform, das Kernteil mit einer Außenseite die Unterseite der Schuheinlegesohle bzw. des Schuheinlegesohlen-Rohlings bildet. Solche sohlenstabilisierenden und fußstützenden Kernteile, die bevorzugt dreidimensional ausgebildet sind, können aus einem Schaumkunststoff bestehen, der weiter bevorzugt mit einem harten PU-Schaum ausgebildet wurde. Weiter bevorzugt ist z.B. in einem Fersenbereich eine Ausnehmung angeordnet, die mit weichem Schaumkunststoff versehen ist, welcher beispielsweise auch für den Vorderfußbereich verwendet wird.

Selbstredend sind vom Erfindungsgedanken alle Farben und Muster auf einer transparenten Folie aufbringbar, die zumindest vorübergehend eine (geringe) Haftung an der transparenten Folie zeigen. Mit dem erfindungsgemäßen Schaumkunststoff-Schuheinlegesohlen-Rohling wird somit eine Aufwertung von Schaumkunststoff-Schuheinlegesohlen-Rohlingen erzielt, so dass solche Schuheinlegesohlen-Rohlinge beispielsweise ohne weitere dekorative Maßnahmen an Endkunden verkauft werden können, da sie bereits ein ansprechendes Erscheinungsbild aufweisen. Jedoch sind vom Erfindungsgedanken auch Schuheinlegesohlen-Rohlinge umfasst, welche nach dem Schäumen durch einen Orthopäden bzw. Schuhorthopädietechniker angepasst werden, bevor sie in einen Schuh zur Behandlung eventuellen Fehlstellung eingelegt werden. Mit den erfindungsgemäßen Schaumkunststoff-Schuheinlegesohle-Rohlingen wird ein ansprechender, mit variabler Optik versehbarer Schaumkunststoff-Schuheinlegesohlen-Rohling bereitgestellt, der durch seine ansprechende und wertige Optik verstärkt als Schuheinlegesohle und nicht als orthopädischer Therapie- oder Behandlungsartikel wahrgenommen wird, dessen Funktion er jedoch erfüllen kann.

In den folgenden Figuren werden Ausführungsbeispiele für erfindungsgemäße Schuheinlegesohlen-Rohlinge beschrieben, welche den Erfindungsgedanken jedoch nicht einschränken. Stellvertretend für das erfindungsgemäße Aufbringen einer bedruckten transparenten Folien ist in der Figurenbeschreibung rein beispielhaft das Anschäumen ausgewählt worden, wobei der Fachmann mitliest, dass das Aufbügeln einer bedruckten transparenten Folie für das Erscheinungsbild des veredelten Schaumkunststoff-Schuheinlegesohlen-Rohlings ein zumindest gleichwertiges Verfahren darstellt, wobei am aufgewerteten Schaumkunststoff-Schuheinlegesohlen-Rohling die Art der Aufbringung der bedruckten Folie erkennbar ist. So ist eine angeschäumte Folie in den Schaumkunststoff teilweise integriert bzw. darin eingebettet, wobei eine aufgebügelte auf den Schaumkunststoffkörper bzw. auf einer Schaumkunststoffoberfläche "aufgesetzt" verbunden ist, wobei weiter den Tragekomfort störende Kanten verschliffen sein können. Die Figuren zeigen:
- Figur 1:: einen erfindungsgemäßen Schaumkunststoff-Schuheinlegesohlen-Rohling mit einer auf der Oberseite angeordneten, mit einem Linienmuster bedruckten, transparenten Folie;
- Figur 2:: den Schaumkunststoff-Schuheinlegesohlen-Rohling gemäß Figur 1 in einer Schnittdarstellung längs der Linie A-A;
- Figur 3:: den Schaumkunststoff-Schuheinlegesohlen-Rohling gemäß Figur 1 in einer Schnittdarstellung gemäß der Schnittlinie B-B;

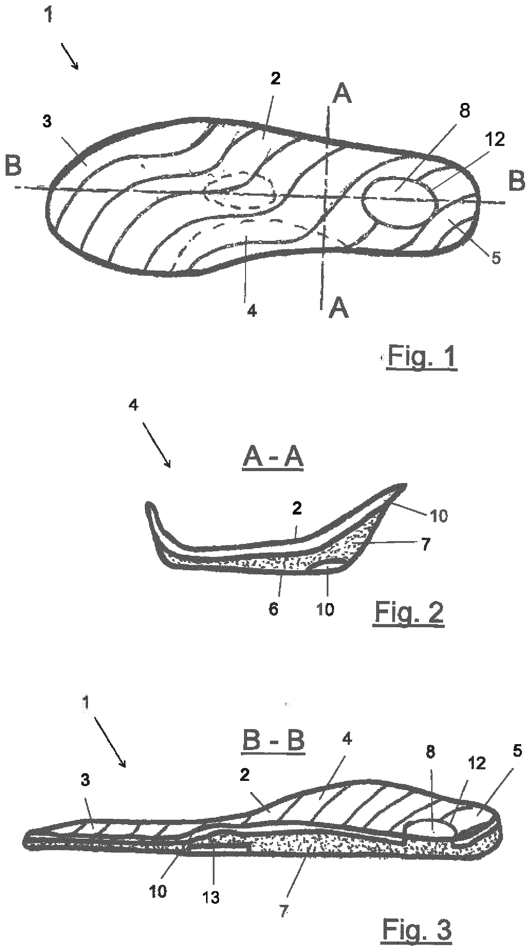

Figur 1 zeigt einen erfindungsgemäßen Schaumkunststoff-Schuheinlegesohlen-Rohling 1, dessen Oberseite 2 im Vorderfußbereich 3, im Mittelfußbereich 4 und im Fersenbereich 5 eine bedruckte transparente Folie 10 aufweist, die auf der bedruckten Seite mit Schaumkunststoff 7 angeschäumt ist. Erfindungsgemäß kann die bedruckte transparente Folie, mit ihrer bedruckten Oberfläche zum Schaumkunststoff weisend, auch aufgebügelt sein. Im Fersenbereich ist eine Fersenmulde 12 angedeutet, womit gleichzeitig ein auf der Oberseite ausgebildetes Fußbett der Schaumkunststoff-Schuheinlegesohle-Rohling hingewiesen wird. Im Bereich der Fersenmulde ist eine Ausnehmung 8 in der transparenten Folie 10 vorgesehen, um diesen Bereich optisch hervorzuheben. Durch die bedruckte transparente Folie 10 erhält der Schaumkunststoff-Schuheinlegesohlen-Rohling 1 ein ansprechendes Erscheinungsbild und verliert seinen rohen schlichten Eindruck, den Rohlinge nach Entnahme aus einer Ausschäumform üblicherweise aufweisen. Der in Figur 1 gezeigte Rohling 1 kann in einem weiteren Schritt sowohl auf der Oberseite 2 als auch auf der Unterseite 6, beispielsweise durch mechanischen Materialabtrag, an einen Fuß bzw. an einen Schuh angepasst werden, ohne vom Erfindungsgedanken abzuweichen. Dabei können die bearbeiteten Schaumkunststoffflächen erfindungsgemäß nachträglich mit einer bedruckten transparenten Folie 10 verbügelt werden.

In Figur 2 ist in einem Schnitt quer zur Längsrichtung der erfindungsgemäße Schaumkunststoff-Schuheinlegesohlen-Rohlings 1 gemäß Figur 1 dargestellt, bei dem der Schaumkunststoff 7 derart an die transparente Folie 10 angeschäumt ist, dass die Oberseite 2 von der transparenten Folie 10 gebildet ist. Auf der Unterseite 6 ist im Mittelfußbereich 4 eine dort ebenfalls angeordnete transparente Folie 10 gezeigt (vgl. gestrichelte Linie in Figur 1). Leicht vorstellbar und somit vom Erfindungsgedanken umfasst, ist eine Anordnung einer bedruckten transparenten Folie 10 nur an der Unterseite 6 des Schaumkunststoff-Schuheinlegesohlen-Rohlings. Weiter kann sowohl die Oberseite 2 als auch die Unterseite 6 mit einer bedruckten transparenten Folie 10 versehen sein, wobei die Übergänge zwischen Oberseite 2 und Unterseite 6 fließend sind und die "Seitenflächen" der Sohle mit umfassen können.

In der Figur 3 ist der erfindungsgemäße Schaumkunststoff-Schuheinlegesohlen-Rohling 1 gemäß Figur 1 in einem Längsschnitt dargestellt, der auf seiner Oberseite 2 eine bedruckte transparente Folie 10 aufweist, wobei erfindungsgemäß die bedruckte Seite der transparenten Folie 10 zum Schaumkunststoff 7 zeigt. Der Rohling 1 weist im Mittelfußbereich 4 beispielsweise eine Pelotte 13 auf, die auf der Unterseite 6 in der Art einer bedruckten transparente Folie 10 angebracht ist. Dabei ist auch vorstellbar, dass eine einzubringende Pelotte 13, die beispielsweise aus transparentem Material gefertigt ist, im Thermotransferverfahren bedruckt wird und anschließend zum Festsetzen der Pelotte 13 in die Schäumform eingelegt und mit Schaumkunststoff angeschäumt wird oder die Pelotte 13 oder andere orthopädische Bauteile durch die aufzubügelnde transparente Folie 10 festgesetzt werden. Die an der Unterseite 6 angeordnete bedruckte transparente Folie 10 kann beispielweise nach eventuellen Anpassarbeiten durch einen Schuhorthopädie-Fachmann durch Aufbügeln mit dem Schaumkunststoff 7 verbunden worden sein, wodurch eventuelle Bearbeitungsspuren kaschiert oder gar unkenntlich gemacht werden können.

An der Unterseite 6 kann ferner ein Kernteil angeordnet sein, das aus einem geeigneten Material, bevorzugt beispielsweise aus PU-Schaum im RIM-Verfahren oder beispielsweise im Spritzgussverfahren hergestellt ist. Das Kernteil zeigt bevorzugt im zentralen Fersenbereich 12, etwa unterhalb des Fersenbeins eine Ausnehmung 8, welche mit Schaumkunststoff 7, der beispielsweise auch im Vorderfußbereich 3 verwendet wird, aufgefüllt ist. Dadurch wird eine gute vertikale Dämpfung erreicht, wobei das Kernteil gleichzeitig den Fuß des Trägers der Schuheinlegesohle in horizontalen Richtungen führt, insbesondere durch die dreidimensional ausgebildete Fersenmulde 12.

Insgesamt wird mit dem erfindungsgemäßen Schaumkunststoff-Schuheinlegesohlen-Rohling 1 ein nicht nur optisch aufgewerteter Rohling bereitgestellt, sondern auch ein in seiner Oberflächengüte verbesserter Rohling, der beispielsweise auf der Oberfläche der Unterseite 6 eine im Thermotransferdruckverfahren bedruckte transparente Folie 10 aufweist, die eine besonders rutschsichere und abriebfreie Oberfläche darstellt. Ist eine solche im Thermotransferdruckverfahren bedruckte transparente Folie auf der Oberseite 2 angeordnet, kann zusätzlich zur aufwertenden Optik auch eine verbesserte Trageeigenschaft der Einlegesohle bereitgestellt werden, da über die Folie 10 bevorzugt eine gute Haptik gegenüber dem Fuß des Trägers einer Schuheinlegesohle bereitgestellt werden kann. Durch die Veredelung der Oberfläche mittels der angeschäumten oder aufgebügelten im Thermotransferdruckverfahren bedruckten transparenten Folie 10 entsteht eine hochabriebfeste robuste Oberfläche, welche zudem optisch ansprechend ist.

### Bezuaszeichenliste

- 1: Schaumkunststoff-Schuheinlegesohlen-Rohling
- 2: Oberseite
- 3: Vorderfußbereich
- 4: Mittelfußbereich
- 5: Fersenbereich
- 6: Unterseite
- 7: Schaumkunststoff
- 8: Ausnehmung
- 10: transparente Folie
- 12: Fersenmulde
- 13: Pelotte

## Patentansprüche

1. Schaumkunststoff-Schuheinlegesohlen-Rohling (1), ausgebildet in einer Schäumform, mit einer Oberseite (2), auf der ein Fußbett ausgebildet ist, mit einer Unterseite (6), die an eine Schuhinnenform angepasst ist, und mit einer bedruckten transparenten Folie (10), welche an der Oberseite (2) und/oder an der Unterseite (6) des Schuheinlegesohlen-Rohlings (1) sichtbar angeordnet ist, wobei die mit dem Schaumkunststoff (7) in Kontakt stehende Oberfläche (11) der transparenten Folie (10) im Thermotransferdruck-Verfahren bedruckt ist.

2. Schaumkunststoff-Schuheinlegesohlen-Rohling (1) nach Anspruch 1, bei dem die transparente Folie (10) durch Anschäumen mit dem Schaumkunststoff verbunden ist.

3. Schaumkunststoff-Schuheinlegesohlen-Rohling (1) nach Anspruch 1 oder 2, bei dem die transparente Folie (10) durch Aufbügeln mit dem Schaumkunststoff verbunden ist.

4. Schaumkunststoff-Schuheinlegesohlen-Rohling (1) nach einem der vorangegangenen Ansprüche, bei dem die transparente Folie (10) aus EVA-Material besteht.

5. Schaumkunststoff-Schuheinlegesohlen-Rohling (1) nach einem der vorangegangenen Ansprüche, bei dem die transparente Folie (10o) auf der Oberseite (2) ein anderes Dekor zeigt als die transparente Folie (10u) auf der Unterseite (6).

6. Schaumkunststoff-Schuheinlegesohlen-Rohling (1) nach einem der vorangegangenen Ansprüche, wobei der Rohling (1) im RIM-Schäumverfahren aus einem Polyol und einem Cyanat hergestellt ist.

7. Schaumkunststoff-Schuheinlegesohlen-Rohling (1) nach einem der Ansprüche 1 bis 5, wobei der Rohling (1) aus EVA-Material geschäumt ist.

8. Schaumkunststoff-Schuheinlegesohlen-Rohling (1) nach einem der vorangegangenen Ansprüche, welcher ein durch Fräsen und/oder Schleifen orthopädisch angepasstes Fußbett und/oder eine durch Fräsen und/oder Schleifen orthopädisch angepasste Unterseite (6) aufweist.

9. Schaumkunststoff-Schuheinlegesohlen-Rohling (1) nach einem der vorangegangenen Ansprüche, bei dem auf der Unterseite (6) ein Kernteil angeordnet ist, das mit Schaumkunststoff (7) angeschäumt ist und zumindest teilweise die Unterseite (6) des Rohlings (1) bildet.

10. Schaumkunststoff-Schuheinlegesohlen-Rohling (1) nach Anspruch 8, bei dem das Kernteil aus Schaumkunststoff (7) hergestellt und eine der Oberseite (2) des Rohlings (1) abgewandte Außenseite des Kernteils schuhinnenformangepasst ist.

11. Schaumkunststoff-Schuheinlegesohlen-Rohling (1) nach Anspruch 9 oder 10, bei dem das Kernteil in einem Fersenbereich (5) eine Ausnehmung (8) aufweist, die mit im Vergleich zum Kernteil weicherem Material ausgeschäumt ist.

12. Schaumkunststoff-Schuheinlegesohlen-Rohling (1) nach einem der vorangegangenen Ansprüche, der einen Fersenbereich (5), einen Mittelfußbereich (4) und einen Vorderfußbereich (3) aufweist, die unterschiedliche Shore-Härten aufweisen.

13. Schaumkunststoff-Schuheinlegesohlen-Rohling (1) nach Anspruch 12, der im Fersenbereich (5) eine höhere Shore-Härte aufweist als im Mittelfußbereich (4) und/oder im Vorderfußbereich (3).

14. Schaumkunststoff-Schuheinlegesohlen-Rohling (1) nach einem der vorangegangenen Ansprüche, der auf der Oberseite (2) und/oder Unterseite zumindest in Teilbereichen mit einer Decke bezogen ist.

15. Verfahren zum Aufbringen eines Dekors auf einen in einer Schäumform hergestellten Schaumkunststoff-Schuheinlegesohlen-Rohling, der eine Oberseite (2), auf der ein Fußbett ausgebildet ist, und eine Unterseite (6) aufweist, die an eine Schuhinnenform angepasst ist,
• Ablegen einer im Thermotransferdruck-Verfahren bedruckten transparenten Folie auf der Ober- oder Unterseite des Rohlings mit der bedruckten Seite zum Schaumkunststoff gewandt, und
• Verbinden der bedruckten transparenten Folie mit dem Schaumkunststoff durch thermisches Aktivieren der Sublimationsfarbe und Anpressen der bedruckten transparenten Folie auf den Schaumkunststoff-Schuheinlegesohlen-Rohling.

## Claims

1. Shoe insole blank (1) of foamed plastic material, formed in a foaming mould, with an upper side (2), on which a footbed is formed, with an underside (6), which is adapted to an inner form of the shoe, and with a printed transparent film (10), which is visibly arranged on the upper side (2) and/or on the underside (6) of the shoe insole blank (1), the surface (11) of the transparent film (10) that is in contact with the foamed plastic (7) being printed on by the thermal transfer printing process.

2. Shoe insole blank (1) of foamed plastic material according to Claim 1, in which the transparent film (10) is connected to the foamed plastic by moulding on.

3. Shoe insole blank (1) of foamed plastic material according to Claim 1 or 2, in which the transparent film (10) is connected to the foamed plastic by ironing on.

4. Shoe insole blank (1) of foamed plastic material according to one of the preceding claims, in which the transparent film (10) consists of EVA material.

5. Shoe insole blank (1) of foamed plastic material according to one of the preceding claims, in which the transparent film (10o) on the upper side (2) has a different decoration than the transparent film (10u) on the underside (6).

6. Shoe insole blank (1) of foamed plastic material according to one of the preceding claims, the blank (1) being produced by the RIM foaming process from a polyol and a cyanate.

7. Shoe insole blank (1) of foamed plastic material according to one of Claims 1 to 5, the blank (1) being foam-moulded from EVA material.

8. Shoe insole blank (1) of foamed plastic material according to one of the preceding claims, which has a footbed that is orthopaedically adapted by milling and/or grinding and/or an underside (6) that is orthopaedically adapted by milling and/or grinding.

9. Shoe insole blank (1) of foamed plastic material according to one of the preceding claims, in which a core part which is moulded on with foamed plastic (7) and at least partially forms the underside (6) of the blank (1) is arranged on the underside (6).

10. Shoe insole blank (1) of foamed plastic material according to Claim 8, in which the core part is produced from foamed plastic (7) and an outer side of the core part that is facing away from the upper side (2) of the blank (1) is adapted to the inner form of the shoe.

11. Shoe insole blank (1) of foamed plastic material according to Claim 9 or 10, in which the core part has in a heel region (5) a recess (8) which is filled with softer foamed material in comparison with the core part.

12. Shoe insole blank (1) of foamed plastic material according to one of the preceding claims, which has a heel region (5), a midfoot region (4) and a front-foot region (3), which have different Shore hardnesses.

13. Shoe insole blank (1) of foamed plastic material according to Claim 12, which has a higher Shore hardness in the heel region (5) than in the midfoot region (4) and/or in the front foot region (3).

14. Shoe insole blank (1) of foamed plastic material according to one of the preceding claims, which is provided with a covering at least in partial regions on the upper side (2) and/or the underside.

15. Method for applying a decoration to a shoe insole blank of foamed plastic material that is produced in a foaming mould and has an upper side (2), on which a footbed is formed, and an underside (6), which is adapted to an inner form of the shoe,
• laying a transparent film that has been printed on by the thermal transfer printing process on the upper side or underside of the blank with the printed side facing the foamed plastic, and
• connecting the printed transparent film to the foamed plastic by thermally activating the sublimation ink and pressing the printed transparent film onto the shoe insole blank of foamed plastic.

## Revendications

1. Ébauche (1) de semelle intérieure de chaussure, en mousse de matériau synthétique, réalisée en une forme de mousse présentant une face supérieure (2), sur laquelle est réalisée une voûte plantaire, une face inférieure (6), qui est adaptée à une forme interne de chaussure, et une feuille (10) transparente imprimée qui est disposée de manière visible sur la face supérieure (2) et/ou sur la face inférieure (6) de l'ébauche (1) de semelle intérieure de chaussure, la surface (11) de la feuille transparente (10) en contact avec la mousse en matériau synthétique (7) étant imprimée par un procédé d'impression par transfert thermique.

2. Ébauche (1) de semelle intérieure de chaussure en mousse de matériau synthétique selon la revendication 1, dans laquelle la feuille (10) transparente est assemblée à la mousse de matériau synthétique par moussage sur celle-ci.

3. Ébauche (1) de semelle intérieure de chaussure en mousse de matériau synthétique selon la revendication 1 ou 2, dans laquelle la feuille (10) transparente est assemblée à la mousse de matériau synthétique par repassage sur celle-ci.

4. Ébauche (1) de semelle intérieure de chaussure en mousse de matériau synthétique selon l'une quelconque des revendications précédentes, dans laquelle la feuille (10) transparente est constituée par un matériau de type EVA.

5. Ébauche (1) de semelle intérieure de chaussure en mousse de matériau synthétique selon l'une quelconque des revendications précédentes, dans laquelle la feuille (10o) transparente présente un autre motif sur la face supérieure (2) que la feuille (10u) transparente sur la face inférieure (6).

6. Ébauche (1) de semelle intérieure de chaussure en mousse de matériau synthétique selon l'une quelconque des revendications précédentes, l'ébauche (1) étant fabriquée dans un procédé de moussage RIM à partir d'un polyol et d'un cyanate.

7. Ébauche (1) de semelle intérieure de chaussure en mousse de matériau synthétique selon l'une quelconque des revendications 1 à 5, l'ébauche (1) étant moussée à partir d'un matériau de type EVA.

8. Ébauche (1) de semelle intérieure de chaussure en mousse de matériau synthétique selon l'une quelconque des revendications précédentes, qui présente une voûte plantaire adaptée de manière orthopédique par fraisage et/ou meulage et/ou une face inférieure (6) adaptée de manière orthopédique par fraisage et/ou meulage.

9. Ébauche (1) de semelle intérieure de chaussure en mousse de matériau synthétique selon l'une quelconque des revendications précédentes, dans laquelle une partie centrale est disposée sur la face inférieure (6), qui est moussée sur la mousse de matériau synthétique (7) et qui forme au moins partiellement la face inférieure (6) de l'ébauche (1).

10. Ébauche (1) de semelle intérieure de chaussure en mousse de matériau synthétique selon la revendication 8, dans laquelle la partie centrale est fabriquée à partir d'une mousse de matériau synthétique (7) et une face externe de la partie centrale opposée à la face supérieure (2) de l'ébauche (1) est adaptée à la forme interne de la chaussure.

11. Ébauche (1) de semelle intérieure de chaussure en mousse de matériau synthétique selon la revendication 9 ou 10, dans laquelle la partie centrale présente un évidement (8) dans une zone (5) de talon, qui est remplie par une mousse en un matériau plus souple que celui de la partie centrale.

12. Ébauche (1) de semelle intérieure de chaussure en mousse de matériau synthétique selon l'une quelconque des revendications précédentes, qui présente une zone (5) de talon, une zone (4) centrale de pied et une zone (3) de l'avant de pied qui présentent des duretés Shore différentes.

13. Ébauche (1) de semelle intérieure de chaussure en mousse de matériau synthétique selon la revendication 12, qui présente dans la une zone (5) de talon une dureté Shore plus élevée que dans la zone (4) centrale du pied et/ou dans la zone (3) de l'avant du pied.

14. Ébauche (1) de semelle intérieure de chaussure en mousse de matériau synthétique selon l'une quelconque des revendications précédentes, qui est revêtue par un revêtement au moins dans des zones partielles sur la face supérieure (2) et/ou la face inférieure.

15. Procédé pour appliquer un motif sur une ébauche de semelle intérieure de chaussure en mousse de matériau synthétique fabriquée dans un moule de formation de mousse, qui présente une face supérieure (2), sur laquelle est réalisée une voûte plantaire, et une face inférieure (6), qui est adaptée à une forme intérieure de chaussure, comprenant
- le dépôt d'une feuille transparente imprimée dans un procédé d'impression par transfert thermique sur la face supérieure ou la face inférieure de l'ébauche, la face imprimée étant tournée vers la mousse en matériau synthétique et
- l'assemblage de la feuille transparente imprimée avec la mousse en matériau synthétique par activation thermique de l'encre de sublimation et compression de la feuille transparente imprimée sur l'ébauche de semelle intérieure de chaussure en mousse de matériau synthétique.
